# EUROPÄISCHE PATENTSCHRIFT

(11) **EP 2 731 855 B1**
(45) Veröffentlichungstag und Bekanntmachung des Hinweises auf die Patenterteilung: **23.03.2016**
(21) Anmeldenummer: 12715597.6
(22) Anmeldetag: 04.04.2012
(51) Int. Cl.: B62D 35/00

(54) **SEITLICHE HECKSPOILEREINRICHTUNG FÜR EIN NUTZFAHRZEUG ODER SEINEN ANHÄNGER**
REAR SIDE SPOILER FOR A LORRY OR ITS TRAILER
DÉFLECTEUR LATÉRAL POUR LA PARTIE ARRIÈRE D'UN POIDS LOURD OU DE SA REMORQUE

(30) Priorität: 14.07.2011 DE 102011107366
(43) Veröffentlichungstag der Anmeldung: 21.05.2014
(73) Patentinhaber: WABCO GmbH, 30453 Hannover (DE)
(72) Erfinder: DIECKMANN, Thomas, 30982 Pattensen (DE); ZIELKE, Frank, 30890 Barsinghausen (DE)
(74) Vertreter: Lauerwald, Jörg
(86) Internationale Anmeldenummer: PCT/EP2012/001547
(87) Internationale Veröffentlichungsnummer: WO 2013/007323

(56) Entgegenhaltungen:
- DE-A1-102009 034 517
- US-A1- 2009 179 456
- US-A1- 2010 201 153
- US-A1- 2010 225 143
- US-A1- 2011 148 140
- US-A1- 2012 223 544

## Beschreibung

Die Erfindung betrifft eine Heckspoilereinrichtung für ein Fahrzeug, insbesondere ein Nutzfahrzeug oder einen Anhänger.

Nutzfahrzeuge wie Lastkraftwagen oder Busse bzw. Anhänger von Lastkraftwagen weisen im Allgemeinen eine Kastenform auf, die eine effektive Nutzung des zur Verfügung stehenden Laderaums und einen direkten Zugang zum Laderaum über das Heck ermöglicht. Die Kastenform führt jedoch bei der Fahrt zu starken Abrisswirbeln hinter dem Heck des Fahrzeugs und somit zu schlechten aerodynamischen Eigenschaften. Heckspoiler dienen der Verbesserung der Aerodynamik eines Fahrzeugs und können den Kraftstoffverbrauch entsprechend senken.

Die DE 10 2009 014 860 A1 schlägt hierzu vor, einen Heckspoiler für ein Nutzfahrzeug an den Seiten und der Oberkante des Hecks durch mehrere, verstellbare Luftleitflächen auszubilden, die im Wesentlichen nach innen gekrümmt und separat verstellbar sind, um sich während der Fahrt selbsttätig der jeweiligen Luftströmung anzupassen.

Einige Nutzfahrzeuge weisen Aufbauten mit einer Zugangsöffnung an ihrem Heck auf, die durch ein Rolltor verschlossen ist. Derartige Fahrzeuge können im Allgemeinen rückwärts bis an eine Rampe gefahren werden, ohne dass der Fahrer vorher auszusteigen braucht, um das Rolltor zu öffnen. Bei Heckspoilerausbildungen wie in der DE 10 2009 014 860 A1 wird das Anfahren an eine Rampe jedoch durch die nach hinten vorragenden Luftleitflächen verhindert oder erschwert.

US 2009/0179456-A1 offenbart gattungsgemäß eine selbsttätig ein fahrende Heckspoilereinrichtung.

Der Erfindun liegt die Aufgabe zugrunde, eine Heckspoilereinrichtung für ein Fahrzeug und ein entsprechendes Fahrzeug zu schaffen, die einen einfachen Zugang zum Heck des Fahrzeugs ermöglichen.

Diese Aufgabe wird durch eine Heckspoilereinrichtung nach Anspruch 1 und ein Fahrzeug nach Anspruch 12 gelöst. Die Unteransprüche beschreiben bevorzugte Weiterbildungen.

Der Erfindung liegt der Gedanke zugrunde, bei einem rückwärtigen Anfahr- oder Einparkvorgang eine selbsttätige Verstellbarkeit der seitlichen Heckspoilereinrichtung durch einen mechanischen Kontakt an z. B. einer Verladestation zu ermöglichen. Hierbei ist eine Verstellung zwischen einer Fahrposition, in der ihr mindestens ein Luftleitelement die aerodynamisch vorteilhafte Konturverlängerung nach hinten ausbildet, und einer Anlageposition bzw. Entladeposition mit ganz oder weitgehend an das Heck angelegtem Luftleitelement möglich.

Die Anlageposition dient zum Beladen und Entladen des Fahrzeugs über die Zugangsöffnung am Heck und wird beim rückwärtigen Anfahren an einen Gegenstand erzeugt.

Somit kann der Fahrer das Fahrzeug rückwärts bis zu einer Rampe bzw. Verladestation anfahren, so dass bei Kontakt mit der Rampe oder Verladestation die Heckspoilereinrichtung selbsttätig verstellt bzw. eingefahren oder einklappt wird, ohne dass der Fahrer hierzu auszusteigen braucht. Dies ist insbesondere bei einem vertikal zu öffnenden Verschluss an der Heckseite des Fahrzeugs, z. B. einem Rolltor oder einer vertikal hochziehbaren Plane, vorteilhaft.

Somit kann ein Benutzer das Fahrzeug bis an die Rampe heranfahren, wodurch die Heckspoilereinrichtung selbsttätig eingefahren wird, den Verschluss anheben und das Fahrzeug in üblicher Weise be- und entladen, und nachfolgend nach Verschließen der hinteren Zugangsöffnung wiederum nach vorne wegfahren, so dass die seitliche Heckspoilereinrichtung bzw. ihr Luftleitelement wieder selbsttätig in die Fahrposition verstellt wird.

Zwischen den beiden seitlichen Heckspoilereinrichtungen kann am Dach bzw. der oberen Kante des Hecks eine mittlere Heckspoilereinrichtung angeordnet sein und z. B. unverändert verbleiben, wenn sie den Be- und Entladevorgang nicht behindert.

Vorteilhafterweise steht in der eingefahrenen Anlageposition das Luftleitelement nicht störend zur Mitte, d.h. zur Eingangsöffnung hin vor. Hierzu weist die Heckspoilereinrichtung laut der Erfindung einen Verstellmechanismus, nämlich einen Gelenkstangen-Mechanismus auf, der die Verstellung des mindestens einen Luftleitelementes zwischen den Positionen ermöglicht, und auch die Federspannung bewirkt. Der Verstellmechanismus kann vorteilhafterweise das Luftleitelement beim Einfalten nach außen führen, so dass es im eingefalteten Zustand nicht die Zugangsöffnung des Hecks blockiert.

Somit können auch längere Luftleitelemente eingesetzt werden, die günstigere aerodynamische Eigenschaften ermöglichen, ohne die Zugangsöffnung zu blockieren. Die Länge der Luftleitelemente ist erfindungsgemäß grundsätzlich nicht begrenzt.

Der Gelenkstangen-Mechanismus ist durch zwei Stangen ausgebildet, von denen die erste, vordere Stange direkt oder indirekt an einem Fahrzeugrahmen bzw. Fahrzeugrahmen-Teil des Fahrzeugs angelenkt ist und die hintere zweite Stange an der ersten Stange angelenkt ist und wiederum das Luftleitelement aufnimmt. Vorteilhafterweise sind die beiden Stangen unterschiedlich lang; die erste Stange erstreckt sich laut der Erfindung in der Fahrposition nach hinten und seitlich nach außen, woraufhin die zweite Stange sich nach hinten und zur Mitte hin erstreckt. Die erste Stange ist dabei vorzugsweise länger als die zweite Stange, z.B. ist die Länge der ersten Stange etwa gleich der Summe der Länge der zweiten Stange und eines Bereichs des Luftleitelementes zwischen dessen Anbindungsgelenk an der zweiten Stange und seinem hinteren Ende.

Ein derartiger Gelenkstangen-Mechanismus kann mit relativ wenigen Bauteilen, z.B. lediglich der ersten und zweiten Stange, und geeigneten Anschlägen zur Festlegung der Fahrposition und der Winkelstellungen in der Fahrposition sowie entsprechenden Federmitteln ausgebildet sein. Vorteilhafterweise sind Federmittel bzw. Federn in den drei Gelenken vorgesehen, um eine dynamische Verstellung zwischen den Positionen beim rückwärtigen Anfahren zu ermöglichen. Hierbei kann z.B. zunächst das Luftleitelement bei Anlage an der Rampe geschwenkt werden und zu seiner relativ flachen Anlage kommen, und nachfolgend ein Einklappen der Stangen erfolgen. Hierbei kann der Verstellmechanismus z.B. durch mehrere derartige Gelenkstangen-Mechanismen ausgebildet sein, die vertikal beabstandet zwischen dem Rahmen und dem Luftleitelement vorgesehen sind.

Durch die Einklappbarkeit, insbesondere auch am hinteren Gelenk, wird ein Einschwenken des durch den Kontakt belasteten Luftleitelementes ermöglicht. Seine nach innen gewölbte Form ermöglicht hierbei ein relativ schonendes Abrollen des Luftleitelementes an der Rampe bzw. dem Widerstand, so dass keine größeren mechanischen Beschädigungen zu erwarten sind und auch bei heftigeren Stößen eine Nachgiebigkeit durch den mehrteiligen Gelenkmechanismus, insbesondere auch die Winkel zwischen den Stangen ermöglicht ist.

Die Herstellung der Heckspoilereinrichtung ist ebenfalls günstig, z. B. bei Ausbildung mit einem größeren Luftleitelement aus z.B. Kunststoff, verstärktem Kunststoff oder Metallblech, und einem Gelenkstangenmechanismus aus z.B. Stangen sowie Gelenkeinsätzen aus Federn und Anschlägen, wodurch der Material- und Kosteneinsatz gering ist.

Die Erfindung wird im Folgenden anhand der beiliegenden Zeichnungen an einer Ausführungsform erläutert. Es zeigen:
- Fig. 1: ein Fahrzeug mit zwei Heckspoilereinrichtungen gemäß einer Ausführungsform der Erfindung;
- Fig. 2: eine Aufsicht auf den seitlichen Heckbereich des Fahrzeugs bei Annäherung an eine Rampe;
- Fig. 3: eine Gelenkausbildung aus Fig. 2;
- Fig. 4 - 9: den auf Fig. 1 folgenden Falt- oder Einklappvorgang der Heckspoilereinrichtung bei Anfahren an die Rampe;
- Fig. 9: den seitlichen Heckbereich in der eingefahrenen bzw. eingeklappten Anlageposition zur Beladung des Fahrzeugs.

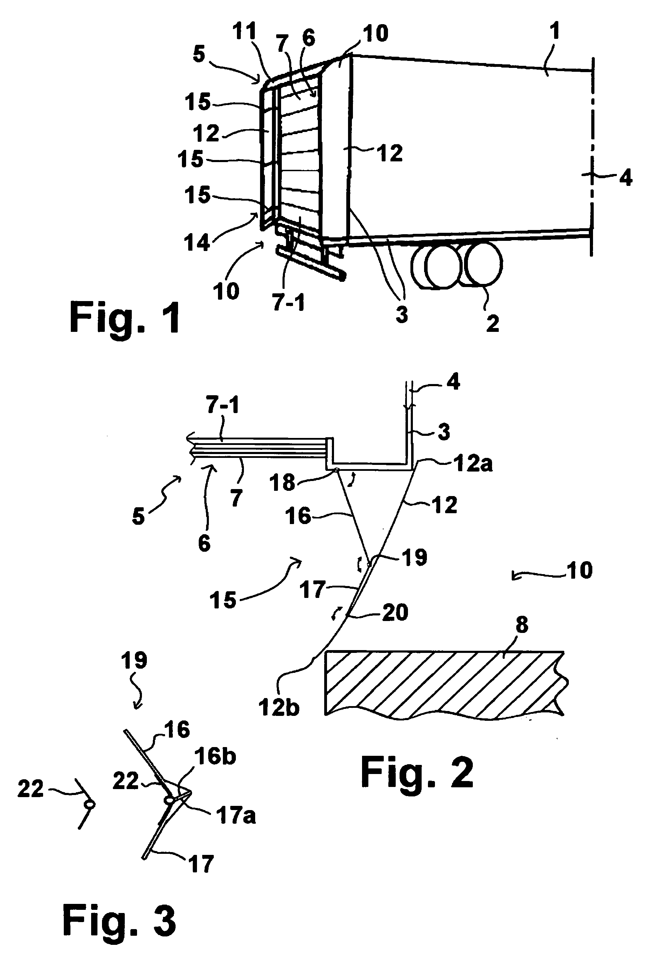

Ein Nutzfahrzeug 1 kann z.B. ein Lastwagen oder ein Anhänger (Lkw-Anhänger) sein. In Fig. 1 ist der hintere Bereich des Nutzfahrzeugs 1 mit Rädern 2, einem hier nicht detaillierter gezeigten Fahrwerk, einem Fahrzeugrahmen (Aufbau) 3 und Seitenwänden 4 gezeigt. Die Seitenwände 4 können fest, z. B. bei einem Kastenwagen aus Metall, oder auch z.B. durch Planen ausgebildet sein, die von Strukturteilen des Fahrzeugrahmens 3 getragen werden.

Am Heck 5 ist eine Zugangsöffnung 6 für den Laderaum des Nutzfahrzeugs 1 vorgesehen, die durch ein vertikal nach oben hochziehbares Rolltor 7 verschlossen ist. Das Rolltor 7 besteht in an sich bekannter Weise aus mehreren, z.B. einander schindelartig überlappenden Elementen 7-1. Somit wird die Zugangsöffnung 6 des Nutzfahrzeugs 1 nicht z.B. durch seitlich nach hinten aufschwenkende Hecktüren verschlossen. Statt des Rolltors 7 kann auch eine andere Verschlusseinrichtung vorgesehen sein, die nicht nach hinten öffnet, insbesondere eine vertikal nach oben öffnender oder nach innen zu öffnender Verschluss wie z. B. eine hochziehbare Plane aus flexiblem Material. Relevant ist, dass kein Schwenkraum oder ähnliches nach hinten zum Öffnen der Verschlusseinrichtung 7 erforderlich ist.

Das Nutzfahrzeug 1 kann somit zum Entladen rückwärts nahe an eine Entladestation, z.B. eine in Fig. 2 gezeigte Rampe 8, bzw. Abdichtung der Rampe heranfahren, sodass der Fahrer oder ein Benutzer nachfolgend das Rolltor 7 oder die andere Verschlusseinrichtung z.B. manuell oder mittels elektrischer Betätigung öffnen kann.

Im Heckbereich des Nutzfahrzeugs 1 sind zwei seitliche Heckspoilereinrichtungen 10 vorgesehen, die direkt oder indirekt an dem Fahrzeugrahmen 3 befestigt sind. Falls die Seitenwände 4 starr ausgebildet und an dem Fahrzeugrahmen befestigt sind, ist somit auch eine Befestigung an den Seitenwänden 4 möglich.

Jede seitliche Heckspoilereinrichtung 10 weist jeweils ein Luftleitelement 12 auf, das in der ausgefahrenen Position bzw. Fahrposition (Fahrstellung) der Fig. 1 und 2 die Fläche der Seitenwände 4 nach hinten verlängert und sich somit vom Heck 5 weiter nach hinten erstreckt. Das Luftleitelement 12 ist z.B. in an sich bekannter Weise nach innen gebogen (gewölbt) und erstreckt sich vorteilhafterweise über die gesamte Höhe der Seitenwände 4.; es kann aus leichtem Material wie Kunststoff oder auch aus Metallblech hergestellt sein. Die Länge des Luftleitelementes 12 nach hinten ist grundsätzlich frei gestaltbar und nicht begrenzt. Die aerodynamische Wölbung derartiger Luftleitelemente 12 ist als solches bekannt; insbesondere wird eine direkte Abrisskante am seitlichen Heckbereich bzw. am Übergang der Seitenwände 4 zum Heck 5 vermieden.

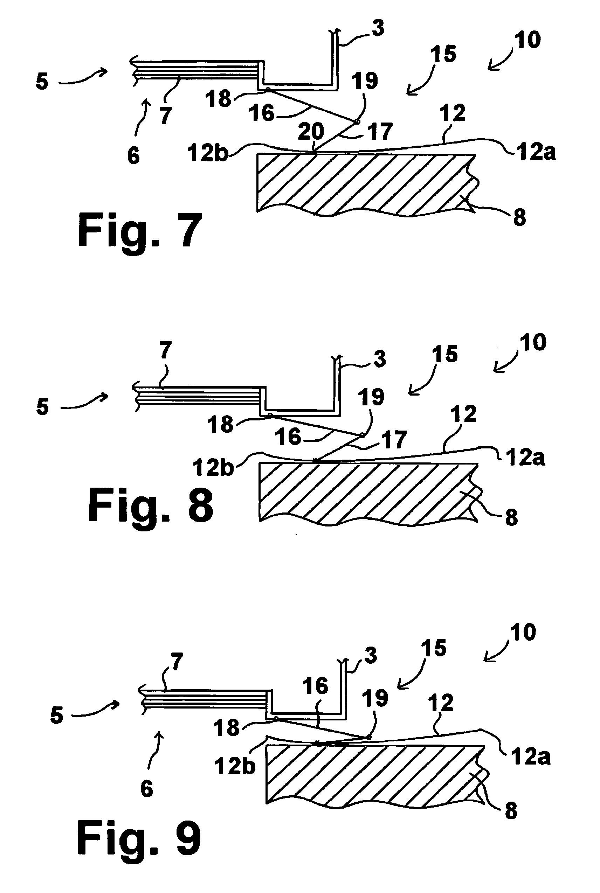

Die Heckspoilereinrichtungen 10 sind durch Anlage an einem hinteren Gegenstand, insbesondere der Rampe 8, selbsttätig zwischen der in Fig. 1 und 2 gezeigten Fahrposition und der in Fig. 9 gezeigten Anlageposition verstellbar. Hierbei sind sie in die Fahrposition der Fig. 1, 2 federvorgespannt, wie nachfolgend detaillierter ausgeführt wird.

Zwischen den beiden seitlichen Heckspoilereinrichtungen 10 kann im oberen Bereich des Hecks 5 z.B. eine obere, mittlere Heckspoilereinrichtung 11 vorgesehen sein, die vorzugsweise nicht verstellt wird. Die obere, mittlere Heckspoilereinrichtung geht hierbei in der gezeigten Fahrposition z.B. im Wesentlichen in die seitlichen Heckspoilereinrichtungen 10 über, um eine zu den beiden Seiten und nach oben hin geschlossene Heckspoileranordnung auszubilden.

Jede Heckspoilereinrichtung 10 weist zusätzlich zu dem Luftleitelement 12 einen Verstellmechanismus 14 auf, die die Verstellbarkeit und elastische Vorspannung des Luftleitelementes 12 gegenüber dem Heck 5 gewährleistet. Gemäß der gezeigten Ausführungsform wird der Verstellmechanismus 14 durch z.B. drei vertikal beabstandet angeordnete Gelenkstangen- Mechanismen 15 gebildet. In Fig. 1 ist diese Ausbildung an der linken Heckspoilereinrichtung 10 zu erkennen. Jeder Gelenkstangen- Mechanismus 15 weist zwei Stangen (Streben) 16, 17 und drei Gelenke 18, 19, 20 auf.

Die erste Stange 16 ist mit dem ersten Gelenk 18 am Heck 5, vorzugsweise dem Fahrzeugrahmen 3 bzw. dem Ende der Seitenwand 5 befestigt. Somit dient das erste Gelenk 18 auch als Befestigungseinrichtung der gesamten Heckspoilereinrichtung 10 am Heck 5 bzw. dem Fahrzeugrahmen 3 im Bereich des Hecks 5. Das zweite Gelenk 19 verbindet die Stangen 16 und 17, von denen die zweite Stange 17 kürzer als die erste Stange 16 ist, z.B. halb so lang oder noch kürzer. Das dritte Gelenk 20 verbindet das Luftleitelement 12 mit der zweiten Stange 17. Die Gelenke 18, 19, 20 sind wie durch die Pfeile in Fig. 2 angedeutet in die gezeigte, geöffnete Federposition vorgespannt. Dementsprechend wirkt die Federkraft entsprechend der Pfeilrichtung zum Vergrößern der durch die Pfeile angezeigten Winkel. Somit wird die erste Stange 16 von der Seitenwand 5 bzw. dem Heck nach hinten weggedrückt, die zweite Stange 17 in eine nach hinten weisende Stellung gedrückt und das Luftleitelement 12 wiederum derartig federvorgespannt, dass es mit seinem vorderem Ende 12a in etwa bündig oder flächig mit der Seitenwand 4 abschließt. Wie gezeigt kann das Luftleitelement 12 hierbei etwas seitlich vorstehen, damit es federvorgespannt an der Seitenwand 4 anliegt. Das hintere Ende 12b des Luftleitelementes 12 ragt frei nach hinten.

Die Gelenke 18, 19, 20 weisen weiterhin Anschläge auf, damit die gezeigten Winkelpositionen der Fig. 1 und 2 eingehalten werden. Die Anschläge können durch zusätzliche Bauteile oder auch die Formgebung der Stangen 16, 17 selbst ausgebildet werden. In Fig. 3 ist eine derartige Ausbildung beispielhaft am Gelenk 19 gezeigt und entsprechend auf die Gelenke 18 und 20 zu übertragen. Das Gelenk 19 weist eine - links ergänzend in Alleinstellung gezeigte - Feder 22 zum Öffnen des Winkels zwischen den Stangen 16 und 17 auf. Die Feder 22 ist vorzugsweise als Drehfeder ausgebildet, hier zweischenklig, wobei durch die Federwirkung der Feder 22 Anschläge 16b und 17a der Stangen 16 und 17 gegeneinander gedrückt werden. Diese Anschläge 16b und 17a können Teile der Stangen 16 und 17 oder zusätzliche Bauteile sein, die zusammen mit der Feder 22 als Gelenk 19 an den Stangen 16, 17 befestigt werden.

In dem Gelenk 18 ist somit ein Anschlag am Fahrzeugrahmen 3 vorgesehen; entsprechend ist am Gelenk 20 ein Anschlag am Luftleitelement 12 ausgebildet, bzw. der Rahmen 3 und das Luftleitelement 12 dienen selbst als entsprechender Anschlag.

Die Gelenke 18, 19, 20 sind somit in die in Fig. 1 und 2 gezeigte, durch Anschläge definierte Fahrstellung vorgespannt.

Wie z.B. aus der Aufsicht der Fig. 2 ersichtlich ist, ist zwischen den Stangen 16 und 17 bereits ein Winkel kleiner 180° nach innen bzw. zur Mittellinie des Fahrzeugs hin ausgebildet. Weiterhin liegt das Gelenk 19 seitlich weiter außen als das Gelenk 20 und das Gelenk 20 wiederum seitlich weiter außen als das vordere Ende 12b des Luftleitelementes 12. Hierdurch wird erreicht, dass beim Anfahren und somit bei einer Druckbelastung auf dem Ende 12b des Luftleitelementes 12 der in den Figuren 3 bis 9 nachfolgend beschriebene Einfaltvorgang selbsttätig erfolgen kann.

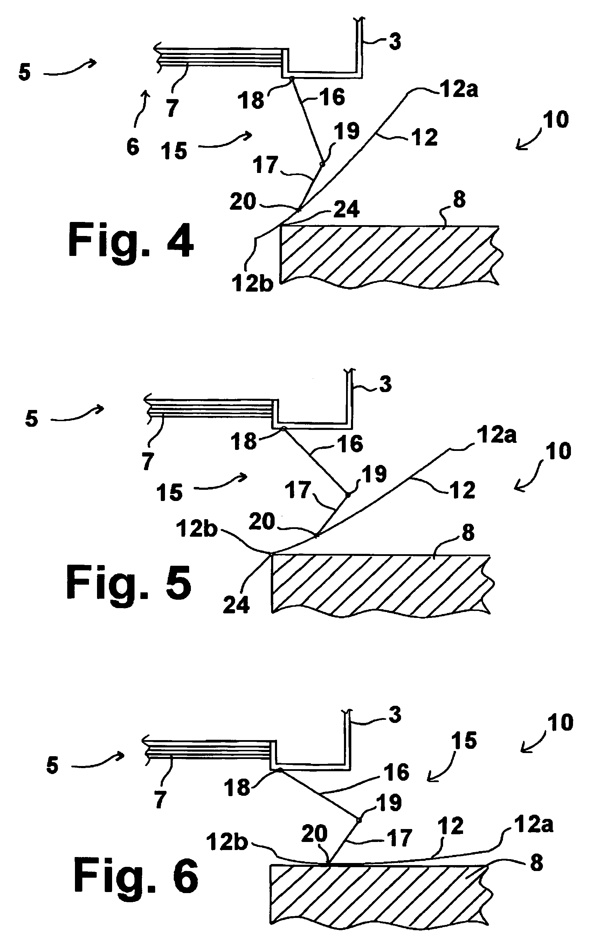

Wenn das Nutzfahrzeug 1 in Rückwärtsrichtung an die Rampe 8 anfährt, gelangt somit das Luftleitelement 12 mit seinem Ende 12b oder einem Endbereich gegen die Rampe 8, die hier z.B. in üblicher Weise einen dreiseitig umlaufenden Gummipuffer aufweist. Gemäß Fig. 4 ist somit der Anlagepunkt 24 im Allgemeinen zwischen dem Ende 12b und dem Gelenk 20 ausgebildet, d.h. an der Außenseite des Luftleitelementes 12. Die Rampe 8 übt somit in dem Anlagepunkt 24 eine nach vorne wirkende Kraft F auf das Luftleitelement 12 aus, wobei dieser Anlagepunkt 24 sich nachfolgend im Allgemeinen verändern kann, da gemäß Fig. 4 bis 9 da Luftleitelement 12 einschwenkt und somit mit seiner gebogenen Außenseite in unterschiedlichen Anlagepunkten gegen den Spoiler 8 gelangt. Durch die Kraft F wird somit mit den entsprechenden Hebelarmen jeweils ein Drehmoment in den Gelenken 20, 19 und 18 ausgeübt, das gegen die Federwirkung der jeweiligen Federn 22 wirkt.

Der weitere Einfaltvorgang erfolgt somit in Abhängigkeit der sich ergebenden Hebelarme und Federstärken der drei Federn 22 der Gelenke 18,19 und 20. Hierbei faltet der Gelenkmechanismus 15 ein, so dass die Winkel zwischen der Stange 16 und dem Rahmen 3 sowie zwischen den beiden Stangen 16 und 17 kleiner werden und somit das Gelenk 20, in dem das Luftleitelement 12 angebunden ist, näher zum Rahmen 3 gelangt. Das Luftleitelement 12 kann hierbei auf der Rampe 8 etwas abrollen bzw. abgleiten, so dass der Winkel zwischen der Stange 17 und dem Luftleitelement 12 z.B. zunächst größer werden kann, wie aus den Figuren 4, 5, 6 ersichtlich ist, und beim nachfolgenden Anfahren gemäß Fig. 7, 8 und 9 wiederum kleiner wird.

Hierzu ist die Federstärke des Gelenkes 20 z.B. etwas schwächer ausgelegt als die Federstärken der Gelenke 18 und 19, gegebenenfalls unter Berücksichtigung der Hebelarme, so dass beim Anfahren gemäß Fig. 4, 5, 6 zunächst das Luftleitelement 12 gegen die Rampe 8 zur Anlage kommt und der Anlagepunkt 24 z.B. im Wesentlichen in der Nähe des Gelenkes 20 liegt. Nachfolgend falten die Stange 16, 17 weiter ein. Im eingefalteten Zustand, d.h. der Anlageposition der Fig. 9, erstreckt sich das Luftleitelement 12 mit seinem hinteren Ende 12b nunmehr in seitlicher Richtung bis etwa zum Rahmen 3 bzw. dem Gelenk 18, so dass der Zugang zur Zugangsöffnung 6 nach Anheben des Rolltors 7 durch das Luftleitelement 12b nicht bzw. nicht relevant beeinträchtigt wird. Somit entspricht die Länge der ersten Stange 16 im Wesentlichen der Summe der Längen der zweiten Stange 17 und des Abschnittes des Luftleitelementes 12 zwischen dem Gelenk 20 und seinem Ende 12b, wie aus Fig. 9 ersichtlich ist.

Falls aufgrund der Ausbildung der Rampe 8 der selbsttätige Einfaltvorgang erschwert oder problematisch ist, kann dieser Einfaltvorgang auch per Hand von einem Benutzer durch Eindrücken des Luftleitelementes 12 im Bereich seines vorderen Endes 12b erfolgen.

Grundsätzlich kann eine Verriegelung für die Heckspoilereinrichtung 10 in der Anlageposition der Fig. 9 vorgesehen sein. Falls die Heckspoilereinrichtung 10 per Hand eingedrückt wird, kann sie durch eine derartige Verriegelung somit fixiert werden. Die Verriegelung kann z.B. durch eine Zusatzstange zwischen den Gelenken 18 und 20 erfolgen. Grundsätzlich ist eine derartige Verriegelung jedoch nicht erforderlich.

Das Luftleitelement 12 kann auch mehrteilig, d.h. in horizontalen Trennungen unterteilt sein, so dass jedes der Teile durch entsprechende Stangen-Mechanismen 15 getragen wird. Die einteilige Ausbildung ist jedoch vorteilhaft, damit durch Anfahren an die Rampe 18 mit nur einem Anlagepunkt 24 das gesamte Luftleitelement 12 eingeklappt wird.

Nach Beladen des Nutzfahrzeuges 1 kann das Rolltor 7 wieder geschlossen werden, und das Nutzfahrzeug 1 wiederum nach vorne wegfahren, so dass sich die Heckspoilereinrichtung 10 wieder selbsttätig entfaltet entsprechend den Vorgang von Fig. 9 zurück in die Fahrposition der Fig. 1, 2.

Statt dem Gelenkstangen-Mechanismus 15 aus den beiden Stangen 16 und 18 kann, unterschiedlich als bei der Erfindung, z.B. das Luftleitelement 12 auch aus superelastischem Material mit geeigneter Formgebung, d.h. im Wesentlichen gebogenen Verlauf entsprechend den Stangen 16, 17 ausgebildet werden. Hierdurch können auch die Gelenke 18 und 20 entfallen.

## Patentansprüche

1. Heckspoilereinrichtung (10) für ein Fahrzeug (1), insbesondere ein Nutzfahrzeug oder einen Anhänger,
wobei die Heckspoilereinrichtung (10) mindestens ein verstellbares Luftleitelement (12) zur aerodynamischen Luftleitung und Konturverlängerung eines seitlichen Bereichs des Hecks (5) des Fahrzeugs (1) aufweist, wobei das Luftleitelement (12) zwischen einer Fahrposition, in der es sich zur aerodynamischen Luftleitung und Konturverlängerung an einem seitlichen Bereich des Hecks (5) nach hinten erstreckt, und einer Anlageposition verstellbar ist, und
das Luftleitelement (12) in die ausgefahrene Fahrposition federvorgespannt und durch Eindrücken des Luftleitelementes (12) von der Rückseite her gegen die Federvorspannung in die Anlageposition verstellbar ist, **dadurch gekennzeichnet, dass** der Verstellmechanismus (14) mindestens einen, vorzugsweise zwei oder mehr vertikal beabstandete Gelenkstangen-Mechanismen (15) aufweist, wobei jeder Gelenkstangen- Mechanismus (15) mindestens zwei Stangen (16, 17) und entsprechende Federmittel (22) zur Ausbildung der Federwirkung aufweist und der Gelenkstangen- Mechanismus (15) eine längere erste Stange (16) und eine kürzere zweite Stange (17) aufweist, wobei die erste Stange (16) in einem ersten Gelenk (18) direkt oder indirekt am Fahrzeug (1), vorzugsweise dessen Heck (5), anbringbar ist und in der ausgefahrenen Fahrposition von dem ersten Gelenk (18) aus nach hinten und seitlich nach außen verläuft, die zweite Stange (17) in einem zweiten Gelenk (19) an der ersten Stange (16) angelenkt ist und in der Fahrposition sich vom zweiten Gelenk (19) nach hinten und zur Mitte hin erstreckt und das Luftleitelement (12) in einem dritten Gelenk (20) an der zweiten Stange (17) angelenkt ist.

2. Heckspoilereinrichtung (10) nach Anspruch 1, **dadurch gekennzeichnet, dass** sie das erste Gelenk (18) als eine Befestigungseinrichtung zur Befestigung am Heck (5) des Fahrzeugs (1), insbesondere an einem Fahrzeugrahmen (3) im Bereich des Hecks (5), aufweist.

3. Heckspoilereinrichtung (10) nach Anspruch 2, **dadurch gekennzeichnet, dass** das Luftleitelement (12 in der Anlageposition seitlich nach außen über die Seitenwand (4) vorsteht und vorzugsweise sich zur Mitte hin etwa bis zu der Befestigungseinrichtung (18) erstreckt

4. Heckspoilereinrichtung(10) nach einem der vorherigen Ansprüche, **dadurch gekennzeichnet, dass** ein vorderes Ende (12a) des Luftleitelementes (12) bei Verstellung in die Anlageposition nach hinten und außen schwenkt.

5. Heckspoilereinrichtung (10) nach einem der vorherigen Ansprüche, **dadurch gekennzeichnet, dass** das Luftleitelement (12) in der eingefahrenen Anlageposition im Wesentlichen parallel zum Heck (5) des Fahrzeugs (1) verläuft.

6. Heckspoilereinrichtung (10) nach einem der vorherigen Ansprüche, **dadurch gekennzeichnet, dass** das Luftleitelement (12) an dem Verstellmechanismus (14) aufgenommen und ohne direkte Anbindung an dem Fahrzeug (1) vorgesehen ist und ein vorderes Ende (12a) und ein hinteres Ende (12b) des Luftleitelementes (12) gegenüber dem Fahrzeug (1) verstellbar sind.

7. Heckspoilereinrichtung (10) nach Anspruch 1, **dadurch gekennzeichnet, dass** das dritte Gelenk (20) zwischen den beiden Enden (12a, 12b) des Luftleitelementes (12) und näher an dem hinteren Ende (12b) des Luftleitelementes (12) angeordnet ist.

8. Heckspoilereinrichtung (10) nach Anspruch 1 oder 7, **dadurch gekennzeichnet, dass** in den Gelenken (18, 19, 20) oder als Teil der Gelenke (18, 19, 20) die Federmittel (22) zur Ausbildung der Federspannung angeordnet oder aufgenommen sind.

9. Heckspoilereinrichtung (10) nach einem der Ansprüche 1, 7 oder 8, **dadurch gekennzeichnet, dass** Anschläge (16b, 17a) vorgesehen sind zur Festlegung einer definierten Winkelstellung der Stangen (16, 17) und des Luftleitelementes (12) in der Fahrposition, wobei die Stangen (16, 17) und das Luftleitelement (12) in die Winkelstellung der Fahrposition vorgespannt sind.

10. Heckspoilereinrichtung (10) nach Anspruch 9, **dadurch gekennzeichnet, dass** die Anschläge (16b, 17a) als Teile der Stangen (16,17) und/oder zusammen mit den Federmitteln (22) als Einheit ausgebildet sind.

11. Heckspoilereinrichtung (10) nach einem der Ansprüche 1,7 bis 10, **dadurch gekennzeichnet, dass** die Länge der ersten Stange (16) etwa der Summe der Länge der zweiten Stange (17) und eines hinteren Abschnitts des Luftleitelementes (12) zwischen seinem hinteren Ende (12b) und dem dritten Gelenk (20) entspricht.

12. Fahrzeug (1), das an seinem Heck (5) eine durch eine vertikal zu verstellende Verschlusseinrichtung (7) verschließbare Zugangsöffnung (6) und zwei Heckspoilereinrichtungen (10) nach einem der vorherigen Ansprüche aufweist,
wobei die Heckspoilereinrichtungen (10) durch Anfahren an einen hinteren Gegenstand (8) von der ausgefahrenen Fahrposition in die eingefahrene Anlageposition verstellbar sind und in der eingefahrenen Anlageposition die Zugangsöffnung (6) durch die Heckspoilereinrichtungen (10) im Wesentlichen nicht verdeckt ist.

13. Fahrzeug nach Anspruch 12, **dadurch gekennzeichnet, dass** es genau eine linke Heckspoilereinrichtung (10) mit genau einem linken Luftleitelement (12) und genau eine rechte Heckspoilereinrichtung (10) mit genau einem rechten Luftleitelement (12) aufweist, wobei das linke und rechte Luftleitelement (12) sich jeweils von der Oberseite des Hecks (5) bis zu dessen unterem Ende erstrecken.

## Claims

1. Rear spoiler device (10) for a vehicle (1), in particular a utility vehicle or a trailer,
wherein the rear spoiler device (10) has at least one movable air guiding element (12) for aerodynamic air guidance and contour extension of a lateral region of the rear (5) of the vehicle (1), wherein the air guiding element (12) can be moved between a travel position, in which it extends to the rear for aerodynamic air guidance and contour extension on a lateral region of the rear (5), and a stowed position, and
the air guiding element (12) is spring preloaded in the extended travel position and can be moved to the stowed position by pressing the air guiding element (12) in from the rear against the spring preload, **characterized in that** the shift mechanism (14) has at least one, preferably two or more vertically spaced articulated rod mechanisms (15), wherein each articulated rod mechanism (15) has at least two rods (16, 17) and corresponding spring means (22) to form the spring effect and the articulated rod mechanism (15) has a longer first rod (16) and a shorter second rod (17), wherein the first rod (16) in a first hinge (18) can be mounted directly or indirectly on the vehicle (1), preferably on its rear (5), and in the extended travel position runs from the first hinge (18) rearward and laterally outward, the second rod (17) is hinged in a second hinge (19) on the first rod (16) and in the travel position extends from the second hinge (19) rearward and towards the middle, and the air guiding element (12) is hinged in a third hinge (20) on the second rod (17).

2. Rear spoiler device (10) according to Claim 1, **characterized in that** it has the first hinge (18) as a fixing device for fixing to the rear (5) of the vehicle (1), in particular to a vehicle frame (3) in the region of the rear (5).

3. Rear spoiler device (10) according to Claim 2, **characterized in that** the air guiding element (12) in the stowed position protrudes laterally outward beyond the side wall (4) and preferably extends towards the middle approximately as far as the fixing device (18).

4. Rear spoiler device (10) according to any of the preceding claims, **characterized in that** a front end (12a) of the air guiding element (12) swivels to the rear and outward when moving into the stowed position.

5. Rear spoiler device (10) according to any of the preceding claims, **characterized in that** the air guiding element (12) in the retracted stowed position runs substantially parallel to the rear (5) of the vehicle (1).

6. Rear spoiler device (10) according to any of the preceding claims, **characterized in that** the air guiding element (12) is provided on the shift, mechanism (14) and without direct connection to the vehicle (1), and a front end (12a) and a rear end (12b) of the air guiding element (12) are movable in relation to the vehicle (1).

7. Rear spoiler device (10) according to Claim 1, **characterized in that** the third hinge (20) is arranged between the two ends (12a, 12b) of the air guiding element (12) and closer to the rear end (12b) of the air guiding element (12).

8. Rear spoiler device (10) according to Claim 1 or 7, **characterized in that** the spring means (22) are arranged or held in the hinges (18, 19, 20) or as part of the hinges (18, 19, 20) to form the spring tension.

9. Rear spoiler device (10) according to any of Claims 1, 7 or 8, **characterized in that** stops (16b, 17a) are provided to establish a defined angular position of the rods (16, 17) and of the air guiding element (12) in the travel position, wherein the rods (16, 17) and the air guiding element (12) are preloaded in the angular position of the travel position.

10. Rear spoiler device (10) according to Claim 9, **characterized in that** the stops (16b, 17a) are formed as parts of the rods (16, 17) and/or as a unit together with the spring means (22).

11. Rear spoiler device (10) according to any of Claims 1, 7 to 10, **characterized in that** the length of the first rod (16) corresponds approximately to the sum of the length of the second rod (17) and a rear portion of the air guiding element (12) between its rear end (12b) and the third hinge (20).

12. Vehicle (1) having at its rear (5) an access opening (6) which can be closed by a vertically movable closure device (7), and two rear spoiler devices (10) according to any of the preceding claims,
wherein the rear spoiler devices (10) can be moved from the extended travel position into the retracted stowed position by reversing up to an object (8) at the rear, and in the retracted stowed position the access opening (6) is not substantially covered by the rear spoiler devices (10).

13. Vehicle according to Claim 12, **characterized in that** it has precisely one left rear spoiler device (10) with precisely one left air guiding element (12), and precisely one right rear spoiler device (10) with precisely one right air guiding element (12), wherein the left and right air guiding elements (12) each extend from the top of the rear (5) to its bottom.

## Revendications

1. Déflecteur arrière (10) pour un véhicule (1), en particulier un véhicule utilitaire ou une remorque, le déflecteur arrière (10) présentant au moins un élément de guidage d'air réglable (12) pour le guidage aérodynamique de l'air et pour le prolongement du contour d'une région latérale de la partie arrière (5) du véhicule (1), l'élément de guidage d'air (12) pouvant être réglé entre une position de conduite dans laquelle il s'étend vers l'arrière au niveau d'une région latérale de la partie arrière (5) pour le guidage aérodynamique de l'air et le prolongement du contour, et une position d'application, et
l'élément de guidage d'air (12) étant précontraint par ressort dans la direction de conduite sortie et pouvant être réglé par pression sur l'élément de guidage d'air (12) depuis le côté arrière à l'encontre de la précontrainte de ressort dans la position d'application, **caractérisé en ce que** le mécanisme de réglage (14) présente au moins un, de préférence deux ou plus de deux mécanismes à tiges articulées espacés verticalement (15), chaque mécanisme à tiges articulées (15) présentant au moins deux tiges (16, 17) et des moyens de ressort correspondants (22) pour réaliser l'effet de ressort et le mécanisme à tiges articulées (15) présentant une première tige plus longue (16) et une deuxième tige plus courte (17), la première tige (16) pouvant être montée dans une première articulation (18) directement ou indirectement sur le véhicule (1), de préférence sur sa partie arrière (5) et, dans la position de conduite sortie, s'étendant depuis la première articulation (18) vers l'arrière et latéralement vers l'extérieur, la deuxième tige (17) étant articulée dans une deuxième articulation (19) à la première tige (16) et, dans la position de conduite, s'étendant depuis la deuxième articulation (19) vers l'arrière et vers le centre et l'élément de guidage d'air (12) étant articulé dans une troisième articulation (20) à la deuxième tige (17).

2. Déflecteur arrière (10) selon la revendication 1, **caractérisé en ce qu'**il présente la première articulation (18) en tant que dispositif de fixation pour la fixation à la partie arrière (5) du véhicule (1), en particulier à un châssis de véhicule (3) dans la région de la partie arrière (5).

3. Déflecteur arrière (10) selon la revendication 2, **caractérisé en ce que** l'élément de guidage d'air (12), dans la position d'application, fait saillie latéralement vers l'extérieur au-delà de la paroi latérale (4) et de préférence s'étend vers le milieu approximativement jusqu'au dispositif de fixation (18).

4. Déflecteur arrière (10) selon l'une quelconque des revendications précédentes, **caractérisé en ce que** l'extrémité avant (12a) de l'élément de guidage d'air (12) pivote vers l'arrière et vers l'extérieur lors du réglage dans la position d'application.

5. Déflecteur arrière (10) selon l'une quelconque des revendications précédentes, **caractérisé en ce que** l'élément de guidage d'air (12) s'étend dans la position d'application rentrée essentiellement parallèlement à la partie arrière (5) du véhicule (1).

6. Déflecteur arrière (10) selon l'une quelconque des revendications précédentes, **caractérisé en ce que** l'élément de guidage d'air (12) est reçu au niveau du mécanisme de réglage (14) et est prévu sans liaison directe au véhicule (1) et une extrémité avant (12a) et une extrémité arrière (12b) de l'élément de guidage d'air (12) peuvent être réglées par rapport au véhicule (1).

7. Déflecteur arrière (10) selon la revendication 1, **caractérisé en ce que** la troisième articulation (20) est disposée entre les deux extrémités (12a, 12b) de l'élément de guidage d'air (12) et est plus près de l'extrémité arrière (12b) de l'élément de guidage d'air (12).

8. Déflecteur arrière (10) selon la revendication 1 ou 7, **caractérisé en ce que** les moyens de ressort (22) sont disposés ou reçus dans les articulations (18, 19, 20) ou en tant que partie des articulations (18, 19, 20) pour réaliser la contrainte par ressort.

9. Déflecteur arrière (10) selon l'une quelconque des revendications 1, 7 ou 8, **caractérisé en ce que** des butées (16b, 17a) sont prévues pour la fixation d'une position angulaire définie des tiges (16, 17) et de l'élément de guidage d'air (12) dans la position de conduite, les tiges (16, 17) et l'élément de guidage d'air (12) étant précontraints dans la position angulaire de la position de conduite.

10. Déflecteur arrière (10) selon la revendication 9, **caractérisé en ce que** les butées (16b, 17a) sont réalisées sous forme de parties des tiges (16, 17) et/ou sont réalisées conjointement avec les moyens de ressort (22) sous forme d'unité.

11. Déflecteur arrière (10) selon l'une quelconque des revendications 1, 7 à 10, **caractérisé en ce que** la longueur de la première tige (16) correspond approximativement à la somme des longueurs de la deuxième tige (17) et d'une portion arrière de l'élément de guidage d'air (12) entre son extrémité arrière (12b) et la troisième articulation (20).

12. Véhicule (1) présentant au niveau de sa partie arrière (5) une ouverture d'accès (6) pouvant être fermée par un dispositif de fermeture (7) pouvant être réglé verticalement et deux déflecteurs arrière (10) selon l'une quelconque des revendications précédentes,
les déflecteurs arrière (10) pouvant être réglés en les avançant contre un objet arrière (8) depuis la position de conduite sortie dans la position d'application rentrée et, dans la position d'application rentrée, l'ouverture d'accès (6) n'étant sensiblement pas recouverte par les déflecteurs arrière (10).

13. Véhicule selon la revendication 12, **caractérisé en ce qu'**il présente exactement un déflecteur arrière gauche (10) avec exactement un élément de guidage d'air gauche (12) et exactement un déflecteur arrière droit (10) avec exactement un élément de guidage d'air droit (12), les éléments de guidage d'air gauche et droit (12) s'étendant à chaque fois depuis le côté supérieur de la partie arrière (5) jusqu'à son extrémité inférieure.
